# EUROPÄISCHE PATENTANMELDUNG

(11) **EP 4 190 492 A1**
(43) Veröffentlichungstag der Anmeldung: **07.06.2023**
(21) Anmeldenummer: 21212218.8
(22) Anmeldetag: 03.12.2021
(51) Int. Cl.: B25B 5/00, B25B 5/08, B23Q 3/06

(54) **WERKBANKADAPTERSYSTEM FÜR WERKBÄNKE MIT LOCHRASTER**

(71) Anmelder: Ernst Dünnemann GmbH & Co. KG, 49419 Wagenfeld (DE)
(72) Erfinder: Diephaus, Matthias, 49419 Wagenfeld (DE)
(74) Vertreter: Holz, Christian

(57) **Zusammenfassung**

Die vorliegende Erfindung betrifft ein Werkbankadaptersystem (1, 2) für Werkbänke (4) mit Lochraster, mit einem Adapter (2), welcher ausgebildet ist, auf einer Arbeitsfläche (41) der Werkbank (4) positioniert zu werden und wenigstens eine Spannvorrichtung (3) zum Spannen eines Werkstücks aufzunehmen, und mit wenigstens einem Adapterspanner (1), welcher ausgebildet ist, in einem Loch (42) des Lochrasters der Werkbank (4) horizontal verkeilt zu werden und den Adapter (2) in seiner Positionierung auf der Arbeitsfläche (41) der Werkbank (4) vertikal zu verspannen.

## Beschreibung

Die vorliegende Erfindung betrifft ein Werkbankadaptersystem für Werkbänke mit Lochraster.

Auf verschiedenen Gebieten in Industrie und Handwerk sind sogenannte Werkbänke bekannt, welche der Bearbeitung von Werkstücken aus verschiedenen Materialien dienen. Eine Werkbank stellt einen Arbeitstisch dar, auf dessen Arbeitsfläche das zu bearbeitende Werkstück von einer Person aufgelegt und mittels Werkzeug bearbeitet werden kann. Dabei kann das Werkstück auf der Arbeitsfläche durch spezielle Vorrichtungen wie beispielsweise Spannmittel gehalten und in der Position fixiert werden, um der Person die Bearbeitung zu erleichtern. Derartige spezielle Vorrichtungen können separat ausgebildet und mit der Werkbank verbunden werden. Zusätzlich oder alternativ können Werkbänke eingebaute derartige Vorrichtungen wie beispielsweise einen Schraubstock aufweisen, um ein Werkstück zu halten, was beispielsweise durch das Einspannen des Werkstücks zwischen Spannbacken erfolgen kann. Derartige Werkbänke werden üblicherweise von Tischler in der Holzbearbeitung verwendet und auch als Hobelbänke bezeichnet.

Um ein Werkstück in der vertikalen Richtung auf der Arbeitsfläche einer Werkbank zu halten bzw. zu fixieren kann es ausreichend sein, eine Spannkraft rein vertikal von oben auf das Werkstück aufzubringen. Je nach Anwendung können hierzu als Spannmittel entweder Schraubzwingen oder Klemmzwingen verwendet werden, wobei Klemmzwingen aufgrund der Erzeugung der Spannkraft mittels eines Exzenterhebels eine geringere Klemmkraft als Schraubzwingen erzeugen können.

Nachteilig ist bei derartigen Spannmitteln, dass diese üblicherweise von unterhalb der Arbeitsfläche sowie von oberhalb des Werkstücks verwendet werden, was aufgrund der bügelförmigen Ausbildung derartiger Spannmittel lediglich am Rand der Arbeitsfläche der Werkbank erfolgen kann. Dies schränkt die Verwendung derartiger Spannmittel stark ein, da sie nicht vom Rand der Arbeitsfläche entfernt eingesetzt werden können.

Nachteilig ist bei derartigen Spannmitteln ebenfalls, dass diese lediglich rein vertikal eine Klemmkraft bzw. eine Spannkraft auf das Werkstück ausüben können. Werden bei der Bearbeitung des Werkstücks jedoch Kräfte bzw. Drücke in der Horizontalen auf das Werkstück ausgeübt, können derartige Spannmittel das Werkstück nicht sicher halten bzw. fixieren.

Bei Werkbänken ist es auch bekannt, die Arbeitsfläche mit einem Lochraster oder auch mit Schienensystemen, insbesondere T-Nuten-Schienen, zu versehen, sodass die zuvor erwähnten speziellen Vorrichtungen in den Löchern des Rasters angeordnet werden können. Dies kann es weiterhin ermöglichen, das Werkstück auf der Arbeitsfläche aufzulegen. Zusätzlich können die speziellen Vorrichtungen im Rahmen des Lochrasters mit einer gewissen Flexibilität positioniert werden, um das Werkstück je nach Anwendungsfall möglichst passend auf der Arbeitsfläche zu fixieren. Zur Verspannung in der Vertikalen können Spannmittel verwendet werden, welche in ein Loch des Rasters eingesetzt und dort geklemmt werden können, um auf das Werkstück in der Vertikalen eine Spannkraft aufbringen zu können.

Die US 2009/0252570 A1 beschreibt einen Werkbankanker, kurz Anker, der gegenläufige Keile verwendet, die so konfiguriert sind, dass sie sich seitlich ausdehnen, wenn sie in Längsrichtung zusammengezogen werden, um den Anker in einer Werkbankbohrung oder einem anderen Loch geeigneter Größe zu verriegeln, indem eine Schraube angezogen wird, die durch einen Keil und in ein Gewindeloch in einem zweiten Keil geht. Die beiden Keile werden radial durch einen sie gemeinsam umgebenden O-Ring verliersicher aber entlang der Längsrichtung gegeneinander verschiebbar aneinander gehalten. Ein weiteres Gewindeloch im Anker kann eine Schraube oder einen Bolzen aufnehmen, um Werkstücke, Vorrichtungen oder andere Konstruktionen am Anker und damit an der Werkbank, in der der Anker oder die Anker montiert sind, zu befestigen. Bei dem Werkbankanker der US 2009/0252570 A1 handelt es sich somit um einen Adapter für ein Rasterloch einer Werkbank, an welchem dann beispielsweise ein Spannmittel befestigt werden kann.

Das US 6,889,968 B1 beschreibt eine universell einsetzbare Spannvorrichtung. Die Spannvorrichtung besteht aus einem geraden Schaft, dessen unteres Ende an einer kurzen zylindrischen Hülse befestigt ist, und aus einem beweglichen Arm, der über den Schaft gleitet. Der Schaft kann mittels der Hülse in eine Aufnahme bzw. in ein Loch eines Rasters einer Werkbank eingeführt und dort gehalten werden. Durch das freie Ende des beweglichen Arms wird eine Gewindestange geführt, die am unteren Ende mit einem Klemmkissen und am oberen Ende mit einem Drehgriff versehen ist. Die Spannvorrichtung wurde entwickelt, um ein Werkstück fest, schnell und bequem auf der Arbeitsfläche eines Tisches, einer Werkbank oder einer Werkzeugmaschine zu halten. Die Spannvorrichtung kann leicht über die Werkbank aus Holz oder Metall oder über die Arbeitsfläche einer Werkzeugmaschine verschoben werden.

Um die Funktionalität der Spannvorrichtung des US 6,889,968 B1 zu verbessern sind Anbauteile vorgesehen. Eine Y-Achsen-Befestigungsvorrichtung kann verschiebbar auf dem Zylinderschaft montiert werden, um ein zweites Werkstück entlang einer Achse zu halten, die im Allgemeinen senkrecht zur vertikalen Spannrichtung der Spannvorrichtung verläuft.

Eine Aufgabe der vorliegenden Erfindung ist es, die Möglichkeiten zur Nutzung einer Werkbank mit Lochraster bei der Bearbeitung von Werkstücken zu verbessern. Insbesondere sollen die Möglichkeiten verbessert werden, das Werkstück zu positionieren und bzw. oder zu fixieren. Insbesondere sollen die Möglichkeiten verbessert werden, eine Spannvorrichtung zum Spannen des Werkstücks zu positionieren und bzw. oder zu fixieren. Dies soll möglichst einfach, kostengünstig, bauraumsparend, flexibel nutzbar und bzw. oder intuitiv einsetzbar erfolgen. Zumindest soll eine Alternative zu den bekannten Möglichkeiten geschaffen werden.

Die Aufgabe wird erfindungsgemäß durch ein Werkbankadaptersystem, durch einen Adapterspanner sowie durch einen Adapter mit den Merkmalen der unabhängigen Ansprüche gelöst. Vorteilhafte Weiterbildungen sind in den Unteransprüchen beschrieben.

Somit betrifft die vorliegende Erfindung ein Werkbankadaptersystem für Werkbänke mit Lochraster, mit einem Adapter, welcher ausgebildet ist, auf einer Arbeitsfläche der Werkbank positioniert zu werden und wenigstens eine Spannvorrichtung zum Spannen eines Werkstücks aufzunehmen, und mit wenigstens einem Adapterspanner, welcher ausgebildet ist, in einem Loch des Lochrasters der Werkbank horizontal verkeilt zu werden und den Adapter in seiner Positionierung auf der Arbeitsfläche der Werkbank vertikal zu verspannen. Die Angaben einer horizontalen Ebene bzw. einer vertikalen Richtung sind dabei in kartesischen Koordinaten bei bestimmungsgemäßer Verwendung der entsprechenden Elemente des Werkbankadaptersystems zu verstehen. Von dem Begriff "Werkbank" sind auch Hobelbänke umfasst.

Mit anderen Worten kann erfindungsgemäß ein Werkbankadaptersystem bereitgestellt werden, welches als Systemkomponenten wenigstens einen erfindungsgemäßen Adapter und wenigstens einen erfindungsgemäßen Adapterspanner aufweist, wobei vorzugsweise der Adapter auch mit wenigstens zwei Adapterspannern verwendet werden kann. Der Adapter selbst dient dazu, wenigstens eine Spannvorrichtung wie beispielsweise eine Zwinge aufzunehmen, sodass die Zwinge dann das zu bearbeitende Werkstück vertikal oder horizontal spannen bzw. klemmen kann. Der Adapter stellt somit eine Entsprechung der Arbeitsfläche mit Lochraster dahingehend dar, dass die zusätzliche Spannvorrichtung anstelle in einem Loch der Arbeitsfläche von dem Adapter aufgenommen werden kann. Der Adapter selbst kann dabei von dem Adapterspannern in einem Loch der Arbeitsfläche gehalten werden, sodass mittels des Adapters und des Adapterspanners die Spannvorrichtung ebenso sicher mit der Werkbank verbunden werden kann wie dies bei einer direkten Verbindung der Fall wäre. Dabei kann jedoch die Verwendung des erfindungsgemäßen Werkbankadaptersystems die Möglichkeiten erweitern, die Spannvorrichtung zu positionieren und damit das Werkstück zu fixieren.

Gemäß einem Aspekt der Erfindung weist der Adapter wenigstens eine erste Durchgangsöffnung auf, durch welche vertikal hindurch der Adapterspanner den Adapter verspannen kann. Dies kann eine konkrete Möglichkeit der Umsetzung sein, um den Adapter mittels des Adapterspanners auf der Arbeitsfläche der Werkbank vertikal zu verspannen. Da dies durch das Material des Adapters bzw. dessen Grundkörpers hindurch erfolgt, kann dies einen vergleichsweise sicheren Halt ermöglichen. Die erste Durchgangsöffnung kann dabei teilweise oder vorzugsweise vollständig vom Material des Adapters bzw. dessen Grundkörpers umschlossen sein.

Dabei vorzugsweise die erste Durchgangsöffnung als erstes Langloch auszubilden kann dahingehend vorteilhaft sein, dass hierdurch eine gewisse stufenlose Positionierung des Adapters gegenüber dem Adapterspanner ermöglicht werden kann, was die Flexibilität der Positionierung der Spannvorrichtung entsprechend erhöhen kann.

Gemäß einem weiteren Aspekt der Erfindung weist der Adapter ferner wenigstens eine zweite, zur ersten Durchgangsöffnung horizontal versetzte Durchgangsöffnung, vorzugsweise Langloch, auf, durch welche vertikal hindurch der Adapterspanner den Adapter alternativ verspannen kann. Somit kann der Adapter an zwei Positionen der Werkbank durch jeweils einen Adapterspanner fixiert werden. Dies kann die Haltbarkeit der Fixierung verbessern, insbesondere bei horizontalen Belastungen. Weiterhin kann das Werkbankadaptersystem durch die zweite Durchgangsöffnung schräg auf der Arbeitsfläche fixiert werden.

Gemäß einem weiteren Aspekt der Erfindung weist das Werkzeugadaptersystem wenigstens zwei Adapterspanner auf. Die beiden Adapterspanner können unterschiedlich oder gleich ausgebildet sein, wobei letzteres die Teilevielfalt und damit auch die Kosten reduzieren kann. Hierdurch kann das erfindungsgemäße Werkbankadaptersystem ausreichend Adapterspanner aufweisen, um die entsprechenden zuvor genannten Aspekte konkret umzusetzen.

Gemäß einem weiteren Aspekt der Erfindung weist die erste Durchgangsöffnung, vorzugsweise und die zweite Durchgangsöffnung, senkrecht zu ihrer vertikalen Erstreckung eine Einschnürung auf und der Adapterspanner ist zweiteilig ausgebildet, um im getrennten Zustand durch die erste Durchgangsöffnung hindurch geführt zu werden und im verbundenen Zustand beidseitig der Einschnürung wenigstens formschlüssig gehalten zu werden. Mit anderen Worten ist die erste Durchgangsöffnung nicht vertikal geradlinig durchgehend ausgebildet sondern weist, vorzugsweise in der vertikalen Richtung etwa mittig, eine Verengung als Einschnürung auf. Der Adapterspanner ist entsprechend abschnittsweise ausgebildet, um nicht vollständig durch die Einschnürung hindurch zu passen. Hierdurch können die entsprechenden Elemente bzw. Bauteile des Adapterspanners voneinander getrennt, durch die Einschnürung hindurch geführt und dann wieder miteinander verbunden werden, sodass der Adapterspanner formschlüssig von der ersten Durchgangsöffnung aufgenommen werden kann. Dies kann eine verliersichere Handhabung ermöglichen.

Gemäß einem weiteren Aspekt der Erfindung weist der Adapterspanner ein Schiebeelement und ein Halteelement auf, welche als gegenläufige Keile derart ausgebildet sind, entlang der vertikalen Erstreckung des Adapterspanners gegeneinander gedrückt zu werden und sich hierdurch senkrecht zur vertikalen Erstreckungsrichtung des Adapterspanners seitlich auszudehnen. Hierdurch kann ein kraftschlüssiger Halt innerhalb eines Lochs der Werkbank mit mechanisch einfachen Mitteln umgesetzt werden.

Vorzugsweise weist bzw. weisen das Schiebeelement und bzw. oder das Halteelement senkrecht zur vertikalen Erstreckungsrichtung des Adapterspanners zumindest abschnittsweise eine der Innenseite des Lochs des Lochrasters der Werkbank zugewandte Profilierung auf. Eine derartige Profilierung können insbesondere Rillen oder dergleichen sein, welche vorzugsweise horizontal verlaufen können, um Bewegungen in der vertikalen Richtung entgegenzuwirken. In jedem Fall kann hierdurch der Halt des Schiebeelements und bzw. oder des Halteelements im Loch der Werkbank verbessert werden.

Vorzugsweise zusätzlich oder alternativ weisen das Schiebeelement und das Halteelement senkrecht zur vertikalen Erstreckungsrichtung des Adapterspanners einen zylindrischen oder rechteckigen, vorzugsweise quadratischen, Querschnitt auf. Hierdurch können das Schiebeelement und das Halteelement an die entsprechenden Geometrien der Löcher von Werkbänken angepasst werden.

Gemäß einem weiteren Aspekt der Erfindung weist der Adapterspanner einen sich vertikal länglich erstreckenden Grundkörper auf, welcher durch eine Durchgangsöffnung des Schiebeelements und durch eine Durchgangsöffnung des Halteelements hindurch führt, wobei die Durchgangsöffnung des Schiebeelements und bzw. oder die Durchgangsöffnung des Halteelements gegenüber dem Grundkörper ein Spiel aufweist oder als Langloch ausgebildet ist, welches das seitliche Ausdehnen ermöglicht. Somit können das Schiebeelement und das Halteelement mittels des Grundkörpers zusammengehalten werden. Gleichzeitig kann das Schiebeelement aufgrund des ausreichenden Spiels seiner Durchgangsöffnung bzw. dessen Ausführung als Langlochhorizontal bzw. senkrecht zum Grundkörper gegenüber dem Halteelement beweglich sein, um das zuvor beschriebene horizontale Verkeilen ermöglichen zu können. Die Durchgangsöffnung des Halteelements kann entsprechend klein ausgebildet sein, um das Halteelement mit etwas weniger Spiel aufzunehmen, jedoch eine Beweglichkeit senkrecht zum Grundkörper zu vermeiden. Das Halteelement kann aber auch feststehend mit dem Grundkörper verbunden sein. Alternativ oder zusätzlich kann auch das Spiel der Durchgangsöffnung des Halteelements entsprechend ausgebildet sein, sodass sich das Halteelement senkrecht zum Grundkörper verschieben kann bzw. sich sowohl der Schiebeelement als auch das Halteelement senkrecht zum Grundkörper verschieben können. Entsprechend kann auch das Schiebelement feststehend mit dem Grundkörper verbunden sein. Dies gilt entsprechend für die Ausgestaltung als Langloch.

Gemäß einem weiteren Aspekt der Erfindung weist der Grundkörper einen Anschlag auf, gegen welchen das Schiebeelement vertikal gedrückt werden kann, oder der Grundkörper ist feststehend mit dem Schiebeelement verbunden, vorzugsweise verschraubt, und der Adapterspanner weist ein Spannelement auf, welches gegenüber dem Grundkörper beweglich, vorzugsweise schraubbar, ausgebildet ist, um das Halteelement vertikal gegen das Schiebeelement zu drücken, oder umgekehrt. Hierdurch kann die Relativbewegung der vertikalen Richtung bzw. entlang der länglichen Erstreckung des Grundkörpers konkret umgesetzt werden, indem vom Spannelement eine entsprechende Kraft ausgeübt werden kann. Das Spannelement kann hierdurch den Grundkörper zu sich hin ziehen, sodass das Schiebeelement auf das Halteelement drückt und dieses über die korrespondierenden Teilflächen horizontal verschiebt und bzw. oder selbst horizontal verschoben wird. Dabei die Bewegung des Spannelements als ein Schrauben vorzusehen kann eine selbsthaltende Wirkung der Positionierung des Spannelements sowie eine wirkungsvolle Kraftübertragung ermöglichen.

Vorzugsweise kann das Spannelement als Hülse mit einem Innengewinde auf ein Außengewinde des Grundkörpers, insbesondere als Schraube wie beispielsweise als Sechskantschraube, aufgeschraubt werden und ist ferner ausgebildet, über das Maß der Schraubverbindung die Kraft auf das Schiebeelement und bzw. oder Halteelement einzustellen. Dies kann eine konkrete Umsetzung des zuvor beschriebenen Aspekts der Erfindung ermöglichen.

Gemäß einem weiteren Aspekt der Erfindung weist der Adapterspanner eine Mutter auf, welche ausgebildet ist, auf ein Außengewinde des Halteelements geschraubt zu werden, um die Mutter von einer Seite der Einschnürung gegen dessen Rand zu drücken und das Halteelement, vorzugsweise einen Kragen des Halteelements, von der gegenüberliegenden Seite der Einschnürung gegen dessen Rand zu ziehen. Die kann ein vertikales Verspannen des Halteelements des Adapterspanners gegenüber dem Adapter bzw. dessen Grundkörper ermöglichen. Insbesondere kann auf diese Art und Weise das Halteelement am Adapter bzw. dessen Grundkörper vormontiert werden, was die Handhabung erleichtern kann.

Vorzugsweise ist die oberer Aufweitung des entsprechenden Langlochs des Adapters bzw. dessen Grundkörpers senkrecht zur länglichen Erstreckung des Langlochs in der Horizontalen derart dimensioniert, dass die Mutter vom Langloch aufgenommen und selbsttätig gegen Verdrehen gehalten werden kann. Dies kann den Aufwand für die Person deutlich reduzieren. Gleichzeitig kann ein Verschieben und ein Positionieren der Mutter, insbesondere mit bereits im Eingriff befindlichen Halteelement, innerhalb des Langlochs erfolgen, was die Verwendung verbessern kann.

Gemäß einem weiteren Aspekt der Erfindung weist der Adapterspanner, vorzugsweise das Spannelement, einen Exzenterhebel auf, welcher ausgebildet ist, vorzugsweise mittels einer dazwischenliegenden Unterlegscheibe, den Adapterspanner gegenüber dem Adapter zu verspannen. Hierdurch kann seitens des Exzenterhebels eine zusätzliche vertikale Verspannung erfolgen, wenn der Exzenterhebel in die entsprechende Position umgelegt wird.

Gemäß einem weiteren Aspekt der Erfindung weist der Adapter wenigstens eine, vorzugsweise mehrere, vertikale Aufnahme für die Spannvorrichtung auf. Hierdurch kann die weitere bzw. zusätzliche Spannvorrichtung wie zuvor beschrieben vom Adapter bzw. dessen Grundkörper in der vertikalen Richtung aufgenommen werden. Dabei mehrere vertikale Aufnahmen vorzusehen kann die Möglichkeiten erweitern, die Spannvorrichtung gegenüber dem Adapter zu positionieren.

Vorzugsweise ist die vertikale Aufnahme als vertikale Lochaufnahme oder als vertikale Schienenaufnahme ausgebildet. Eine vertikale Lochaufnahme kann insbesondere zylindrisch ausgebildet sein, einen entsprechenden Zapfen der Spannvorrichtung formschlüssig aufzunehmen. Ebenso kann eine vertikale Schienenaufnahme ein entsprechendes Ende der Spannvorrichtung, welches beispielsweise einen T-Nut-Adapter wie beispielsweise eine T-Nut-Schraube oder einen T-Nutstein aufweisen kann, aufnehmen und gleichzeitig eine horizontale Verschiebbarkeit und damit Positionierung der Spannvorrichtung entlang der vertikalen Schienenaufnahme ermöglichen, was ebenfalls die Möglichkeiten erweitern kann, die Spannvorrichtung gegenüber dem Adapter zu positionieren.

Vorzugsweise ist ein Grundkörper des Adapters aus Holz ausgebildet und die vertikale Schienenaufnahme weist eine Schiene aus Metall oder Kunststoff auf. Dies kann die Umsetzung des Adapters bzw. dessen Grundkörpers aus Holz ermöglichen und gleichzeitig eine Schienenaufnahme mit erhöhter Festigkeit zur Verfügung stellen, um die Spannvorrichtung sicher aufnehmen und halten zu können. Dies kann insbesondere dadurch unterstützt werden, indem die Schiene C-förmig gebogen ist und die Kanten des T-Nut-Adapters vertikal umgreift, so dass senkrecht zur länglichen Erstreckungsrichtung des Schienenaufnahme ein Formschluss erreicht werden kann.

Gemäß einem weiteren Aspekt der Erfindung weist der Adapter wenigstens eine, vorzugsweise mehrere, horizontale Aufnahme für die Spannvorrichtung auf. Hierdurch kann zusätzlich oder alternativ wenigstens eine horizontale Aufnahme und vorzugsweise mehrere horizontale Aufnahmen für die Spannvorrichtung geschaffen werden. Dieses kann insbesondere dahingehend vorteilhaft sein, dass die Spannvorrichtung so ihre spannende bzw. klemmende Wirkung in der horizontalen Ebene ausüben kann, was ohne den erfindungsgemäßen Adapter für die Spannvorrichtung gar nicht möglich wäre. Somit können insbesondere hierdurch weitere Nutzungsmöglichkeiten der Werkbank bzw. der Spannvorrichtung überhaupt erst geschaffen werden. Dabei mehrere horizontale Aufnahmen seitens des Adapters bzw. dessen Grundkörpers vorzusehen kann entsprechend die Flexibilität der Umsetzung erhöhen.

Vorzugsweise ist die horizontale Aufnahme als horizontale Lochaufnahme oder als horizontale Schienenaufnahme ausgebildet. Die Loch- bzw. Schienenaufnahme kann hierzu in das Material des, vorzugsweise hölzernen, Grundkörpers des Adapters eingebracht sein, beispielsweise durch Bohren oder durch Fräsen. Vorzugsweise ist ein Grundkörper des Adapters aus Holz ausgebildet und die horizontale Schienenaufnahme weist eine Schiene aus Metall oder Kunststoff auf. Hierdurch können die entsprechenden zuvor beschriebenen Aspekte der vertikalen Aufnahme auch bei der horizontalen Aufnahme umgesetzt und genutzt werden.

Gemäß einem weiteren Aspekt der Erfindung weist der Adapter wenigstens eine erste gerade Seitenfläche auf, welche ausgebildet ist, senkrecht zur Arbeitsfläche der Werkbank ausgerichtet zu werden, um als Anlagefläche des Werkstücks zu dienen. Hierdurch kann der Adapter bzw. dessen Grundkörper auch als Anschlag genutzt werden, so dass eine Kante eines Werkstücks an dem Adapter angelegt und hierdurch positioniert werden kann. Dies kann die Nutzungsmöglichkeiten des erfindungsgemäßen Adapters erhöhen.

Vorzugsweise weist der Adapter wenigstens eine zweite gerade Seitenfläche auf, welche rechtwinkelig zur ersten Seitenfläche angeordnet und ausgebildet ist, senkrecht zur Arbeitsfläche der Werkbank ausgerichtet zu werden, um als Anlagefläche eines weiteren Werkstücks zu dienen. Mit anderen Worten können die beiden geraden Seitenflächen des Adapters bzw. seines Grundkörpers einen rechten Winkel ausbilden, um zwei Werkstücke am Adapter anliegend rechtwinklig zueinander positionieren zu können. Auch dies kann die Nutzungsmöglichkeiten des erfindungsgemäßen Adapters erhöhen.

Die vorliegende Erfindung betrifft auch eine Spannvorrichtung zur Verwendung in einem Werkbankadaptersystem wie zuvor beschrieben. Hierdurch kann eine erfindungsgemäße Spannvorrichtung geschaffen werden, um das zuvor beschriebene erfindungsgemäße Werkbankadaptersystem umsetzen und nutzen zu können.

Die vorliegende Erfindung betrifft auch einen Adapter zur Verwendung in einem Werkbankadaptersystem wie zuvor beschrieben. Hierdurch kann ein erfindungsgemäßer Adapter geschaffen werden, um das zuvor beschriebene erfindungsgemäße Werkbankadaptersystem umsetzen und nutzen zu können.

Mehrere Ausführungsbeispiele und weitere Vorteile der Erfindung werden nachstehend im Zusammenhang mit den folgenden Figuren rein schematisch dargestellt und näher erläutert. Darin zeigt:
- Figur 1: eine perspektivische Darstellung eines erfindungsgemäßen Werkbankadaptersystems mit einem erfindungsgemäßen Adapterspanner gemäß einem ersten Ausführungsbeispiel und mit einem erfindungsgemäßen Adapter gemäß einem ersten Ausführungsbeispiel von schräg oben auf einer Werkbank;
- Figur 2: eine alternative Darstellung des erfindungsgemäßen Werkbankadaptersystems der Figur 1 von schräg oben;
- Figur 3: eine Draufsicht auf einen erfindungsgemäßen Adapter gemäß eines zweiten Ausführungsbeispiels;
- Figur 4: einen Querschnitt A-A durch den erfindungsgemäßen Adapter der Figur 3;
- Figur 5: eine perspektivische Explosionsdarstellung des erfindungsgemäßen Adapterspanners gemäß dem ersten Ausführungsbeispiel der Figuren 1 und 2;
- Figur 6: eine perspektivische Darstellung von Komponenten eines erfindungsgemäßen Adapterspanners gemäß einem zweiten Ausführungsbeispiel;
- Figur 7: einen Querschnitt vergleichbar der Figur 4 eines erfindungsgemäßen Werkbankadaptersystems mit Komponenten eines erfindungsgemäßen Adapterspanners gemäß dem ersten oder zweiten Ausführungsbeispiel und mit dem erfindungsgemäßen Adapter gemäß einem dritten Ausführungsbeispiel;

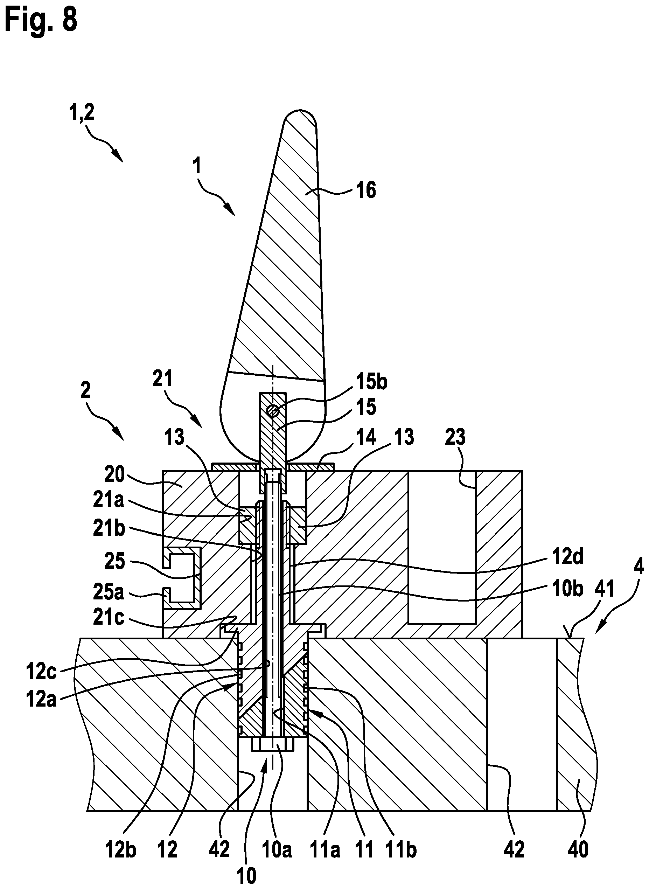

- Figur 8: die Darstellung der Figur 7 mit vollständig montiertem sowie auf einer Werkbank gespanntem Adapterspanner samt Adapter;
- Figur 9: eine seitliche Darstellung einer Spannvorrichtung zur Verwendung mit einem erfindungsgemäßen Werkbankadaptersystem; und
- Figur 10: das erfindungsgemäße Werkbankadaptersystem mit zwei erfindungsgemäßen Adapterspannern gemäß dem ersten Ausführungsbeispiel der Figuren 1 und 2 in Kombination mit der Spannvorrichtung der Figur 9, welche in einer ersten horizontalen Schienenaufnahme angeordnet und in der Querrichtung ausgerichtet ist.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann und der Richtung der Schwerkraft entspricht. Die Längsrichtung X und die Querrichtung Y bilden gemeinsam die Horizontale X, Y, welche auch als horizontale Ebene X, Y bezeichnet werden kann.

Ein erfindungsgemäßes Werkbankadaptersystems 1, 2 weist einen Adapter 2 sowie wenigstens einen Adapterspanner 1 auf, wobei vorzugsweise zwei Adapterspanner 1 verwendet werden können. In jedem Fall kann das Werkbankadaptersystem 1, 2 dazu verwendet werden, wenigstens eine Spannvorrichtung 3 wie beispielsweise eine Holzklemmenzwinge 3 mit einer Werkbank 4 zu verbinden. Die Werkbank 4 weist ein Lochraster in Form von Löchern 42 auf, welche als zylindrische Rundlöcher 42 vertikal in einen Arbeitsflächenkörper 40 der Werkbank 4 eingebracht sein können. Die in der vertikalen Richtung Z nach oben zeigende Oberfläche 41 des Arbeitsflächenkörpers 40 kann auch als Arbeitsfläche 41 der Werkbank 4 bezeichnet werden.

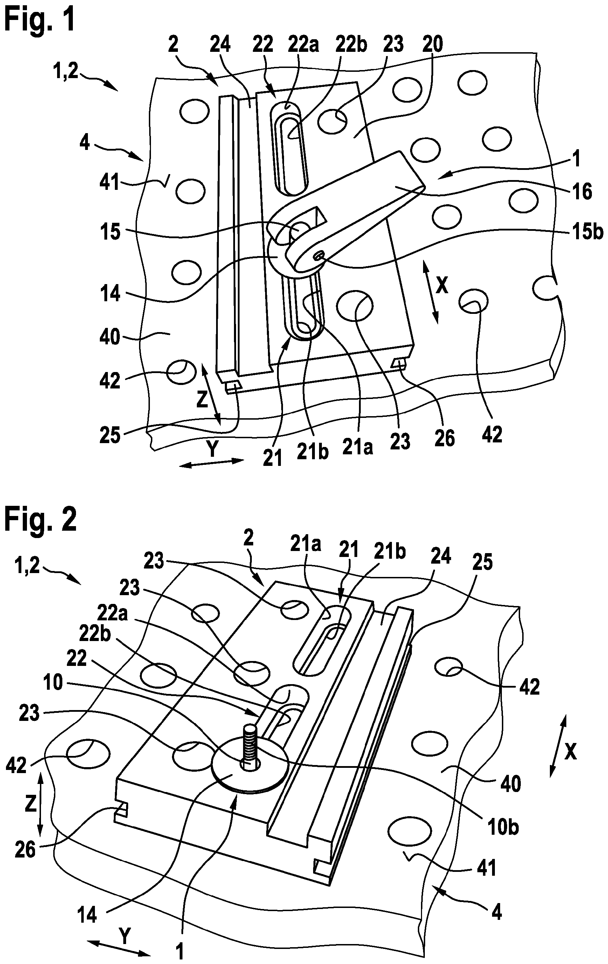

Der Adapter 2 gemäß dem ersten Ausführungsbeispiel ist einstückig, d. h. integral, aus Holz ausgebildet, sodass der Adapter 2 aus einem hölzernen Grundkörper 20 in Form eines Quaders besteht. In den Grundkörper 20 sind in der vertikalen Richtung Z eine erste Durchgangsöffnung 21 in Form eines ersten Langlochs 21 und eine zweite Durchgangsöffnung 22 in Form eines zweiten Langlochs 22 eingebracht, welche in der vertikalen Richtung Z durch den Grundkörper 20 hindurch gehen, siehe zum Beispiel Figuren 1 und 2.

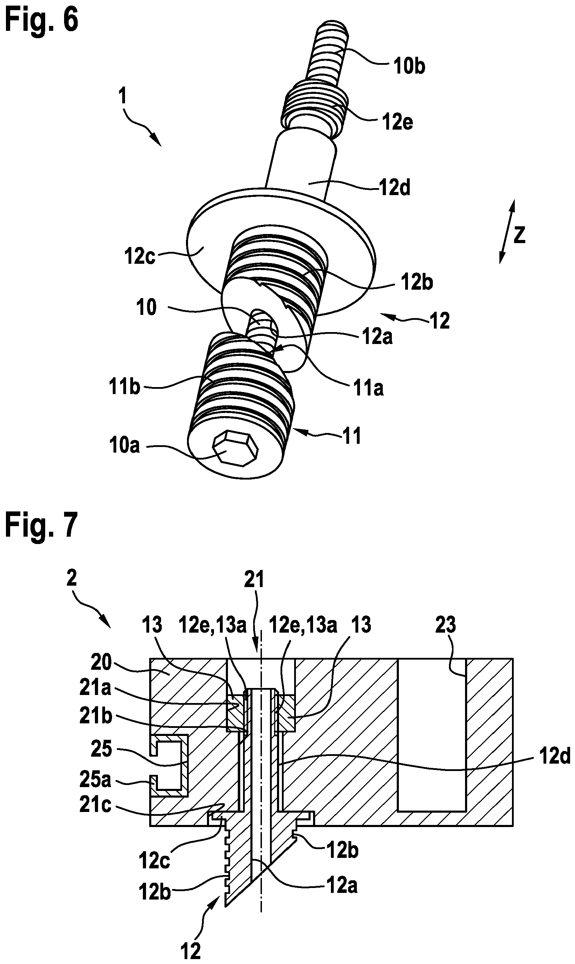

Die beiden Langlöcher 21, 22 erstrecken sich in der Längsrichtung X und sind in der Längsrichtung X zueinander beabstandet. Das erste Langloch 21 weist eine im Wesentlichen rechteckige abgerundete Kontur auf, welche als oberer Aufweitung 21a des ersten Langlochs 21 bezeichnet werden kann. In der vertikalen Richtung Z schließt sich eine Einschnürung 21b vergleichbarer Kontur an die obere Aufweitung 21a an, sodass das erste Langloch 21 durch die Einschnürung 21b in der Horizontalen X, Y verengt wird. In der vertikalen Richtung Z endet das erste Langloch 21 mit einer nach unten hin offenen unteren Aufweitung 21c, welche eine vergleichbare Kontur aufweist, jedoch die obere Aufweitung 21a sowohl in der Längsrichtung X als auch in der Querrichtung Y überragt, siehe zum Beispiel Figur 7. Dies gilt vergleichbar für das zweite Langloch 22, welches seinerseits eine obere Aufweitung 22a, eine Einschnürung 22b und eine untere Aufweitung 22c aufweist.

In der Querrichtung Y seitlich versetzt weist der Grundkörper 20 des Adapters 2 ferner drei gleichgroße vertikale Lochaufnahmen 23 auf, welche jeweils der Aufnahme eines korrespondierenden Zapfens 35 der Spannvorrichtung 3 dienen und somit den flexiblen Einsatz wenigstens einer derartigen Spannvorrichtung 3 bzw. mehrerer derartiger Spannvorrichtungen 3 ermöglichen. Die vertikalen Lochaufnahmen 23 sind jeweils als Sacklöcher ausgebildet, siehe zum Beispiel Figur 7.

In der Querrichtung Y gegenüberliegend seitlich versetzt weist der Grundkörper 20 des Adapters 2 gemäß des ersten Ausführungsbeispiels ferner eine vertikale Schienenaufnahme 24 auf, welche sich in der Längsrichtung X vollständig über die gesamte Länge des Grundkörpers 20 erstreckt und jeweils randseitig offen ausgebildet ist. Die vertikale Schienenaufnahme 24 weist einen rechteckigen Querschnitt auf, sodass dort ein T-Nut-Adapter 36 der Spannvorrichtung 3 aufgenommen, in der Längsrichtung X verschoben sowie in der Querrichtung Y formschlüssig gehalten werden kann. Als T-Nut-Adapter 36 kann eine Schraube mit Kopf oder auch ein T-Nutstein verwendet werden.

Der Grundkörper 20 des Adapters 2 weist ferner eine erste horizontale Schienenaufnahme 25 auf, welche vergleichbar der vertikalen Schienenaufnahme 24 ausgebildet, jedoch an einer Seitenfläche des Grundkörpers 20 und in der Querrichtung Y in der Horizontalen X, Y nach außen zeigend angeordnet ist. Mittels der ersten horizontalen Schienenaufnahme 25 kann die Spannvorrichtung 3 wie zuvor beschriebenen aufgenommen werden, um ihre Spannkraft bzw. Klemmkraft in der Horizontalen X, Y auszuüben.

Der Grundkörper 20 des Adapters 2 gemäß des ersten Ausführungsbeispiels weist ferner der ersten horizontalen Schienenaufnahme 25 in der Querrichtung Y gegenüberliegend eine zweite horizontale Schienenaufnahme 26 auf, welche vergleichbar der ersten horizontalen Schienenaufnahme 25 ausgebildet ist. Dies kann die Möglichkeiten erhöhen, die Spannvorrichtung 3 in der Horizontalen X, Y wirkend anzuordnen.

Gemäß dem dritten Ausführungsbeispiel des Adapters 2 der Figur 7 weist die erste horizontale Schienenaufnahme 25 eine Schiene 25a aus Metall auf, dessen Ränder zueinander hin ausgerichtet sind, sodass der T-Nut-Adapter 36 der Spannvorrichtung 3 in der vertikalen Richtung Z beidseitig am Rand umgriffen und so in der Querrichtung Y formschlüssig gehalten werden kann. Dies kann den Halt des T-Nut-Adapters 36 der Spannvorrichtung 3 in der ersten horizontalen Schienenaufnahme 25 verbessern.

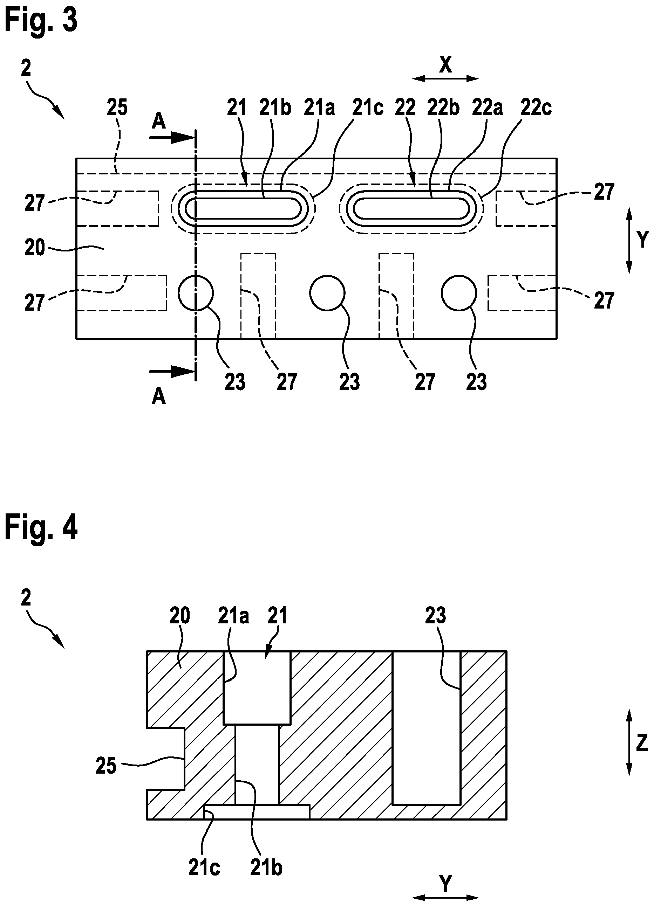

Gemäß dem zweiten Ausführungsbeispiel des Adapters 2 der Figuren 3 und 4 sind stirnseitig jeweils zwei horizontale Aufnahmen 27 sowie an der Seitenfläche, welche der ersten horizontalen Schienenaufnahme 25 gegenüberliegt, zwei weitere zwei horizontale Aufnahmen 27 zwischen den vertikalen Lochaufnahmen 23 im Grundkörper 20 des Adapters 2 vorgesehen, um jeweils einen Zapfen 35 der Spannvorrichtung 3 aufzunehmen, was ebenfalls die Möglichkeiten zum Klemmen bzw. zum Spannen in der Horizontalen X, Y erhöhen kann.

Der Adapterspanner 1 weist einen im Wesentlichen zylindrischen Grundkörper 10 aus Metall in Form einer Sechskantschraube 10 auf, dessen Schraubenkopf 10a einen in der vertikalen Richtung Z unten liegenden Anschlag 10a bzw. Vorsprung 10a des Grundkörpers 10 bildet. Von dem Anschlag 10a erstreckt sich ein zylindrischer Aufnahmebereich 10b mit einem durchgängigen Außengewinde 10c bis zum gegenüberliegenden Ende des Grundkörpers 10.

Entlang der Längsachse des Grundkörpers 10 vom Anschlag 10a ausgehend betrachtet ist ein Schiebeelement 11, als separater metallischer Körper ausgebildet, auf dem Grundkörper 10 bzw. dessen Außengewinde 10b aufgeschraubt, wobei der Grundkörper 10 durch eine Durchgangsöffnung 11a des Schiebeelements 11 hindurchragt. Die Durchgangsöffnung 11a des Schiebeelements 11 erstreckt sich dabei in die Querrichtung Y und weist ein Innengewinde auf.

Entlang der Längsachse des Grundkörpers 10 wird ferner ein Halteelement 12 als separater metallischer Körper vom Grundkörper 10 aufgenommen, wobei der Grundkörper 10 durch eine zylindrische, gewindelose sowie spielbehaftete Durchgangsöffnung 12a des Halteelements 12 hindurchragt. Das Schiebeelement 11 und das Halteelement 12 sind einander zugewandt korrespondierend keilförmig ausgebildet, sodass das Halteelement 12 das Schiebeelement 11 in der Querrichtung Y seitlich wegdrücken kann. Wird somit der Adapterspanner 1 mit dessen Schiebeelement 11 und Halteelement 12 in ein Loch 42 der Werkbank 4 eingeführt und das Schiebeelement 11 wie zuvor beschrieben vom Halteelement 12 in der Querrichtung Y seitlich weggedrückt, so kann hierdurch ein kraftschlüssiges Verklemmen bzw. Verkeilen des Adapterspanners 1 in dem Loch 42 der Werkbank 4 erfolgen.

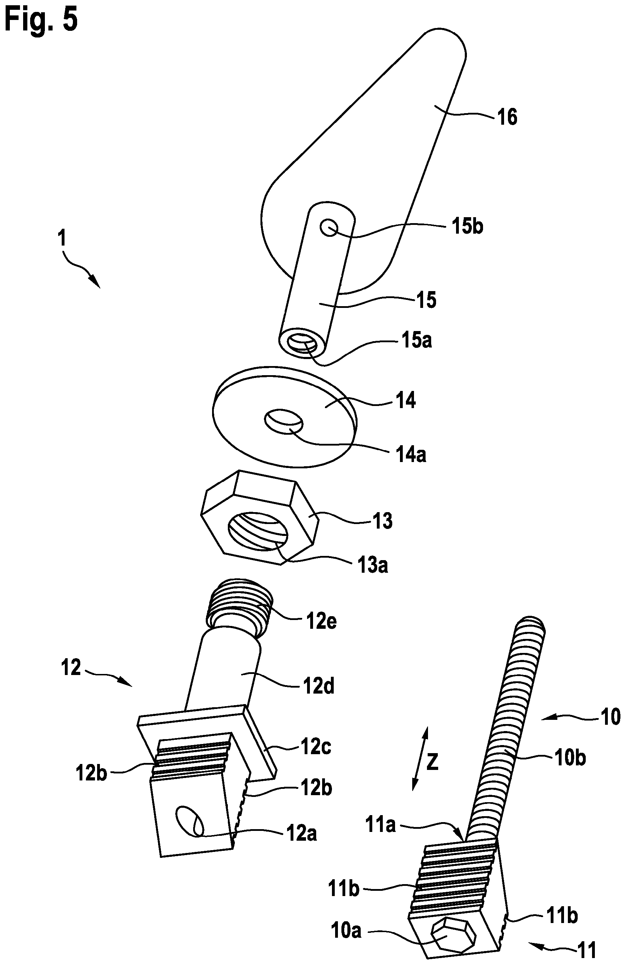

Um dabei den kraftschlüssigen Halt des Adapterspanners 1 im Loch 42 der Werkbank 4 zu verbessern weisen sowohl das Schiebeelement 11 als auch das Halteelement 12 der Innenseite des Lochs 42 der Werkbank 4 zugewandt eine Profilierung 11b, 12b auf, welche jeweils als horizontale Rippen ausgeführt ist. Dabei kann die Außenkontur des Schiebeelements 11 und des Halteelements 12 der Kontur des Querschnitts der Löcher 42 der Werkbank 4 angepasst sein, indem dessen Außenkonturen entweder zylindrisch, siehe Figur 6, oder quadratisch, siehe Figur 5, ausgebildet sind.

Entlang der Längsachse des Grundkörpers 10 bzw. des Halteelements 12 schließt sich der Profilierung 12b des Halteelements 12 ein Kragen 12c an, welcher in der Horizontalen X, Y sich quadratisch (Figur 5) bzw. kreisförmig (Figur 6)flach erstreckend ausgebildet ist. Hierdurch kann das Halteelement 12 mittels seines Kragens 12cvon der unteren Aufweitung 21c des ersten Langlochs 21 aufgenommen werden und in der vertikalen Richtung Z von unten gegen den Grundkörper 20 des Adapters 2 flächig anliegen, was die Übertragung von Kräften besser verteilen kann.

In seinem weiteren Verlauf entlang der Längsachse weist das Halteelement 12 eine Aufnahmebereich 12d auf, welcher der Einschnürung 21b des ersten Langlochs 21 entspricht. Ein Außengewinde 12e ragt dann in der vertikalen Richtung Z über die Einschnürung 21b des ersten Langlochs 21 hinaus. Das Halteelement 12 schließt mit dem Außengewinde nach oben hin ab. Die Durchgangsöffnung 12a des Halteelements 12 mündet an dessen Oberseite. Auf das Außengewinde 12e des Halteelements 12 kann eine Mutter 13 als Sechskantmutter 13 mittels eines Innengewindes 13a aufgeschraubt werden. Dabei sind der Aufnahmebereich 12d und das Außengewinde 12e des Halteelements 12, die Mutter 13 sowie die Einschnürung 21b des ersten Langlochs 21 in der vertikalen Richtung Z derart aufeinander abgestimmt, so dass das Halteelement 12 an dem Adapter 2 bzw. dessen Grundkörper 20 verspannt werden kann. Solange die Mutter 13 nicht vollständig angezogen wird, kann das Halteelement 12 in dem ersten Langloch 21 gehalten und entlang dessen länglicher Erstreckung verschoben bzw. positioniert werden.

Der Adapterspanner 1 umfasst weiterhin ein Spannelement 15, welches als Hülse 15 ausgebildet ist. Das Spannelement 15 weist ein Innengewinde 15 auf, welches mit dem Außengewinde 10b des Grundkörpers 10 korrespondiert und mit diesem verschraubt werden kann. Somit kann der Grundkörper 10 samt Schiebeelement 11 in der vertikalen Richtung Z von unten durch die Durchgangsöffnung 12a des Halteelements 12 geschoben werden, so dass das Ende des Grundkörpers 10 mit dem Außengewinde 10b nach oben aus der Durchgangsöffnung 12a des Halteelements 12 herausragt. Dort kann dann das Spannelement 15 mittels seines Innengewindes 15a aufgeschraubt werden. Das Aufschrauben kann so weit erfolgen, dass hierdurch das Schiebeelement 11 gegen das Halteelement 12 gezogen und hierdurch seitlich weggedrückt werden kann, wodurch das zuvor bereits beschriebene Verkeilen erfolgen kann.

An seinem oberen Ende weist das Spannelement 15 einen Exzenterhebel 16 auf, welcher mittels eines Drehelements 15b in Form eines Stifts 15b drehbeweglich bzw. klappbar am Spannelement 15 gelagert ist. Das Spannelement 15 kann somit gegenüber dem Grundkörper 10 bei gelöstem Exzenterhebel 16 um die Längsachse des Grundkörpers 10 gedreht werden. Ferner kann durch Umlegen des Exzenterhebels 16 die Kraft erhöht werden, mit welcher der Grundkörper 10 samt Schiebeelement 11 gegen das Halteelement 12 gezogen werden kann. Hierdurch kann die Spannkraft gegenüber der Werkbank 4 deutlich erhöht werden.

Um den Adapter 2 auf der Arbeitsfläche 41 der Werkbank 4 zu fixieren, können zunächst Adapter 2 und Adapterspanner 1 miteinander verbunden werden. Hierzu wird die Mutter 13 in der vertikalen Richtung Z von oben in die obere Aufweitung 21a des ersten Langlochs 21 gelegt und von den Seitenkanten der oberen Aufweitung 21a des ersten Langlochs 21 verdrehsicher gehalten. Nun wird das Halteelement 12 in der vertikalen Richtung Z von unten durch das erste Langloch 21 geführt und in die Mutter 13 eingeschraubt. Der Kragen 12c des Halteelements 12 wird dabei von der unteren Aufweitung 21c des ersten Langlochs 21 aufgenommen. Dabei wird, bereits zuvor erwähnt, das Halteelement 12 von der Mutter 13 gehalten, so dass das Halteelement 12 entlang der länglichen Erstreckung des ersten Langlochs 21 verschoben werden kann, bis die gewünschte Position eingenommen ist. Dann kann das Halteelement 12 so weit in die Mutter 13 eingeschraubt werden, dass das Halteelement 12 kraftschlüssig in der Position gehalten werden kann, siehe z.B. Figur 7.

Nun kann der Grundkörper 10 samt Schiebeelement 11 in der vertikalen Richtung Z von unten durch die Durchgangsöffnung 12a des Halteelements 12 geführt werden, so dass oberhalb der Mutter 13 das Spannelement 15 zusammen mit der Unterlegscheibe 14 auf das Außengewinde 10b des Grundkörpers 10 aufgeschraubt werden kann, wie zuvor bereits erwähnt. Hierdurch kann die keilförmige Fläche des Schiebeelements 11 in Kontakt mit der korrespondierenden keilförmigen Fläche des Halteelements 12 gebracht werden. Das Drehen des Spannelements 15 kann dabei mittels des aufgerichteten Exzenterhebels 16 erfolgen.

In diesem Zustand können das Schiebeelement 11 und das Halteelement 12 in das gewünschte Loch 42 der Werkbank 4 eingesetzt und der Grundkörper 20 des Adapters 2 mit seiner glatten Unterseite auf die Arbeitsfläche 41 aufgesetzt werden. Nun kann das Drehen des Spannelements 15 mittels des aufgerichteten Exzenterhebels 16 fortgeführt werden, um das Schiebeelement 11 gegenüber dem Halteelement 12 um Rahmen des Spiels zwischen dem Grundkörper 10 und der Durchgangsöffnung 12a des Halteelements 12 senkrecht zur vertikalen Richtung Z zu verschieben, wodurch das Schiebeelement 11 vom Halteelement 12 seitlich weggedrückt wird, bis sich schließlich das Schiebeelement 11 und das Halteelement 12 in der Horizontalen X, Y mit den Innenseiten des Lochs 42 der Werkbank 4 kraftschlüssig verkeilen. Dies wird durch die jeweilige Profilierung 11b, 12b begünstigt.

Abschließend kann der Exzenterhebel 15 in seine spannende Stellung umgeklappt werden, um auf die Unterlegscheibe 14 zu drücken und einerseits die kraftschlüssige Wirkung von Schiebeelement 11 und Halteelement 12 zu vergrößern und andererseits um über den Kontakt mit der Unterlegscheibe 14 den Grundkörper 20 des Adapters 2 in der vertikalen Richtung Z gegenüber der Werkbank 4 zu verspannen.

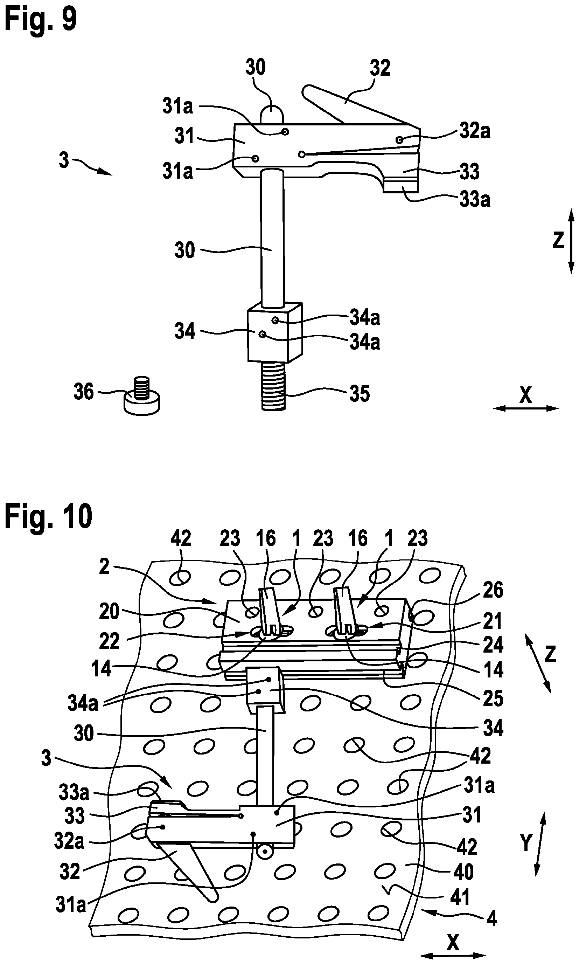

Beispielsweise die Spannvorrichtung 3 wie zuvor beschrieben kann nun am Adapter 2 befestigt werden, um ihrerseits eine klemmende bzw. spannende Wirkung auf ein Werkstück (nicht dargestellt) ausüben zu können. Als Holzklemmenzwinge 3 kann die Spannvorrichtung 3 eine Schiene 30 aufweisen, an dessen einen Ende rechtwinklig ein Spannarm 31 vorgesehen ist. Der Spannarm 31 kann mittels zweier Schienenführungen 31a in Form von Stiften 31a gegenüber der Schiene 30 entlang dessen länglicher Erstreckungsrichtung verschiebbar sein. Am gegenüberliegenden Ende kann der Spannarm 31 einen Spannhebel 32 aufweisen, welcher ebenfalls exzentrisch wirkend ausgebildet und mit einem Drehelement 32a in Form eines Stifts 32a am Spannarm 31 drehbeweglich gelagert sein kann. Der Spannhebel 32 kann exzentrisch auf ein Spannstück 33 wirken, welches entsprechend vom Spannarm 31 weg auf das Werkstück gedrückt werden kann. Um dabei die Oberfläche des Werkstücks zu schonen, kann das Spannstück 33 eine Polsterung 33a aufweisen, siehe zum Beispiel Figur 10.

Am gegenüberliegenden Ende der Schiene 30 kann diese mit einem Fußstück 34 verbunden sein, welches seinerseits mit Verbindungselementen 34a in Form von Stiften 34a feststehend mit der Schiene 30 verbunden sein kann. Das Fußstück 34 kann die zuvor bereits angesprochenen und vorzugsweise auswechselbaren Verbindungsmöglichkeiten mit dem Adapter 2 aufweisen, was zum einen der bereits genannte Zapfen 35 in Form einer Zapfenmuffe 35 oder alternativ der bereits angesprochene T-Nut-Adapter 36 in Form einer T-Nut-Schraube 36 oder ein T-Nutstein 36 sein kann. Mittels der T-Nut-Schraube 36 kann die Holzklemmenzwinge 3 beispielsweise in der metallisch verstärkten ersten horizontalen Schienenaufnahme 25 des Grundkörpers 20 des Adapters 2 gehalten werden, um klemmend bzw. spannend in der Horizontalen X, Y wirken zu können, siehe zum Beispiel Figur 11.

### BEZUGSZEICHENLISTE (Teil der Beschreibung)

- A-A: Querschnitt

- X: Längsrichtung; Tiefe; Länge
- Y: Querrichtung; Breite
- Z: vertikale Richtung; Höhe
- X, Y: Horizontale; horizontale Ebene

- 1, 2: Werkbankadaptersystem

- 1: Adapterspanner
- 10: Grundkörper; Sechskantschraube
- 10a: Anschlag bzw. Vorsprung des Grundkörpers 10 bzw. Schraubenkopf
- 10b: Außengewinde des Grundkörpers 10
- 11: Schiebeelement
- 11a: Durchgangsöffnung des Schiebeelements 11
- 11b: Profilierung des Schiebeelements 11
- 12: Halteelement
- 12a: Durchgangsöffnung des Halteelements 12
- 12b: Profilierung des Halteelements 12
- 12c: Kragen des Halteelements 12
- 12d: Aufnahmebereich des Halteelements 12
- 12e: Außengewinde des Halteelements 12
- 13: Mutter; Sechskantmutter
- 13a: Innengewinde der Mutter 13
- 14: Unterlegscheibe
- 14a: Durchgangsöffnung der Unterlegscheibe 14
- 15: Spannelement; Hülse
- 15a: Innengewinde des Spannelements 14
- 15b: Drehelement; Stift
- 16: Exzenterhebel

- 2: Adapter
- 20: Grundkörper
- 21: erste Durchgangsöffnung; erstes Langloch
- 21a: obere Aufweitung des ersten Langlochs 21
- 21b: Einschnürung des ersten Langlochs 21
- 21c: untere Aufweitung des ersten Langlochs 21
- 22: zweite Durchgangsöffnung; zweites Langloch
- 22a: obere Aufweitung des zweiten Langlochs 22
- 22b: Einschnürung des zweiten Langlochs 22
- 22c: untere Aufweitung des zweiten Langlochs 22
- 23: vertikale (Loch-)Aufnahmen
- 24: vertikale (Schienen-)Aufnahme
- 25: erste horizontale (Schienen-)Aufnahme
- 25a: Schiene der ersten horizontalen Schienenaufnahme 25
- 26: zweite horizontale (Schienen-)Aufnahme
- 27: horizontale (Loch-)Aufnahmen

- 3: Spannvorrichtung; Holzklemmenzwinge
- 30: Schiene
- 31: Spannarm
- 31a: Schienenführungen; Stifte
- 32: Spannhebel
- 32a: Drehelement; Stift
- 33: Spannstück
- 33a: Polsterung des Spannstücks 33
- 34: Fußstück
- 34a: Verbindungselemente; Stifte
- 35: Zapfen; Zapfenmuffe
- 36: T-Nut-Adapter; T-Nut-Schraube; T-Nutstein

- 4: Werkbank mit Lochraster
- 40: Arbeitsflächenkörper
- 41: Arbeitsfläche; Oberfläche des Arbeitsflächenkörpers 40
- 42: Löcher bzw. Rundlöcher des Lochrasters

## Patentansprüche

1. Werkbankadaptersystem (1, 2) für Werkbänke (4) mit Lochraster,
mit einem Adapter (2), welcher ausgebildet ist, auf einer Arbeitsfläche (41) der Werkbank (4) positioniert zu werden und wenigstens eine Spannvorrichtung (3) zum Spannen eines Werkstücks aufzunehmen, und
mit wenigstens einem Adapterspanner (1), welcher ausgebildet ist, in einem Loch (42) des Lochrasters der Werkbank (4) horizontal verkeilt zu werden und den Adapter (2) in seiner Positionierung auf der Arbeitsfläche (41) der Werkbank (4) vertikal zu verspannen.

2. Werkbankadaptersystem (1, 2) nach Anspruch 1,
wobei der Adapter (2) wenigstens eine erste Durchgangsöffnung (21), vorzugsweise ein erstes Langloch (21), aufweist, durch welche vertikal hindurch der Adapterspanner (1) den Adapter (2) verspannen kann.

3. Werkbankadaptersystem (1, 2) nach Anspruch 2,
wobei der Adapter (2) ferner wenigstens eine zweite, zur ersten Durchgangsöffnung (21) horizontal versetzte Durchgangsöffnung (22), vorzugsweise Langloch (22), aufweist, durch welche vertikal hindurch der Adapterspanner (1) den Adapter (2) alternativ verspannen kann.

4. Werkbankadaptersystem (1, 2) nach Anspruch 3,
mit wenigstens zwei Adapterspannern (1).

5. Werkbankadaptersystem (1, 2) nach einem der vorangehenden Ansprüche,
wobei die erste Durchgangsöffnung (21), vorzugsweise und die zweite Durchgangsöffnung (22), senkrecht zu ihrer vertikalen Erstreckung eine Einschnürung (21b) aufweist und
wobei der Adapterspanner (1) zweiteilig ausgebildet ist, um im getrennten Zustand durch die erste Durchgangsöffnung (21) hindurch geführt zu werden und im verbundenen Zustand beidseitig der Einschnürung (21b) wenigstens formschlüssig gehalten zu werden.

6. Werkbankadaptersystem (1, 2) nach einem der vorangehenden Ansprüche,
wobei der Adapterspanner (1) ein Schiebeelement (11) und ein Halteelement (12) aufweist, welche als gegenläufige Keile derart ausgebildet sind, entlang der vertikalen Erstreckung des Adapterspanners (1) gegeneinander gedrückt zu werden und sich hierdurch senkrecht zur vertikalen Erstreckungsrichtung des Adapterspanners (1) seitlich auszudehnen,
wobei vorzugsweise das Schiebeelement (11) und/oder das Halteelement (12) senkrecht zur vertikalen Erstreckungsrichtung des Adapterspanners (1) zumindest abschnittsweise eine der Innenseite des Lochs (42) des Lochrasters der Werkbank (4) zugewandte Profilierung (11b, 12b) aufweist/aufweisen und/oder
wobei vorzugsweise das Schiebeelement (11) und das Halteelement (12) senkrecht zur vertikalen Erstreckungsrichtung des Adapterspanners (1) einen zylindrischen oder rechteckigen, vorzugsweise quadratischen, Querschnitt aufweisen.

7. Werkbankadaptersystem (1, 2) nach Anspruch 6,
wobei der Adapterspanner (1) einen sich vertikal länglich erstreckenden Grundkörper (10) aufweist, welcher durch eine Durchgangsöffnung (11a) des Schiebeelements (11) und durch eine Durchgangsöffnung (12a) des Halteelements (12) hindurch führt,
wobei die Durchgangsöffnung (11a) des Schiebeelements (11) und/oder die Durchgangsöffnung (12a) des Halteelements (12) gegenüber dem Grundkörper (10) ein Spiel aufweist, welches das seitliche Ausdehnen ermöglicht.

8. Werkbankadaptersystem (1, 2) nach Anspruch 7,
wobei der Grundkörper (10) einen Anschlag (10a) aufweist, gegen welchen das Schiebeelement (11) vertikal gedrückt werden kann oder der Grundkörper (10) feststehend mit dem Schiebeelement (11) verbunden, vorzugsweise verschraubt, ist, und
wobei der Adapterspanner (1) ein Spannelement (15) aufweist, welches gegenüber dem Grundkörper (10) beweglich, vorzugsweise schraubbar, ausgebildet ist, um das Halteelement (12) vertikal gegen das Schiebeelement (11) zu drücken, oder umgekehrt,
wobei vorzugsweise das Spannelement (15) als Hülse (15) mit einem Innengewinde (15a) auf ein Außengewinde (10b) des Grundkörpers (10) aufgeschraubt und ausgebildet ist, über das Maß der Schraubverbindung die Kraft auf das Schiebeelement (11) oder Halteelement (12) einzustellen.

9. Werkbankadaptersystem (1, 2) nach einem der Ansprüche 6 bis 8,
wobei der Adapterspanner (1) eine Mutter (13) aufweist, welche ausgebildet ist, auf ein Außengewinde (12e) des Halteelements (12) geschraubt zu werden, um die Mutter (13) von einer Seite der Einschnürung (21b) gegen dessen Rand zu drücken und das Halteelement (12), vorzugsweise einen Kragen (12c) des Halteelements (12), von der gegenüberliegenden Seite der Einschnürung (21b) gegen dessen Rand zu ziehen.

10. Werkbankadaptersystem (1, 2) nach einem der vorangehenden Ansprüche,
wobei der Adapterspanner (1), vorzugsweise das Spannelement (15), einen Exzenterhebel (16) aufweist, welcher ausgebildet ist, vorzugsweise mittels einer dazwischenliegenden Unterlegscheibe (14), den Adapterspanner (1) gegenüber dem Adapter (2) zu verspannen.

11. Werkbankadaptersystem (1, 2) nach einem der vorangehenden Ansprüche,
wobei der Adapter (2) wenigstens eine, vorzugsweise mehrere, vertikale Aufnahme (23, 24) für die Spannvorrichtung (3) aufweist,
wobei vorzugsweise die vertikale Aufnahme (23, 24) als vertikale Lochaufnahme (23) oder als vertikale Schienenaufnahme (24) ausgebildet ist,
wobei vorzugsweise ein Grundkörper (20) des Adapters (2) aus Holz ausgebildet ist und die vertikale Schienenaufnahme (24) eine Schiene aus Metall oder Kunststoff aufweist.

12. Werkbankadaptersystem (1, 2) nach einem der vorangehenden Ansprüche,
wobei der Adapter (2) wenigstens eine, vorzugsweise mehrere, horizontale Aufnahme (25, 26, 27) für die Spannvorrichtung (3) aufweist,
wobei vorzugsweise die horizontale Aufnahme (25, 26, 27) als horizontale Lochaufnahme (27) oder als horizontale Schienenaufnahme (25, 26) ausgebildet ist,
wobei vorzugsweise ein Grundkörper (20) des Adapters (2) aus Holz ausgebildet ist und die horizontale Schienenaufnahme (25) eine Schiene (25a) aus Metall oder Kunststoff aufweist.

13. Werkbankadaptersystem (1, 2) nach einem der vorangehenden Ansprüche,
wobei der Adapter (2) wenigstens eine erste gerade Seitenfläche aufweist, welche ausgebildet ist, senkrecht zur Arbeitsfläche (41) der Werkbank (4) ausgerichtet zu werden, um als Anlagefläche des Werkstücks zu dienen,
wobei vorzugsweise der Adapter (2) wenigstens eine zweite gerade Seitenfläche aufweist, welche rechtwinkelig zur ersten Seitenfläche angeordnet und ausgebildet ist, senkrecht zur Arbeitsfläche (41) der Werkbank (4) ausgerichtet zu werden, um als Anlagefläche eines weiteren Werkstücks zu dienen.

14. Adapterspanner (1) zur Verwendung in einem Werkbankadaptersystem (1, 2) gemäß einem der Ansprüche 1 bis 13.

15. Adapter (2) zur Verwendung in einem Werkbankadaptersystem (1, 2) gemäß einem der Ansprüche 1 bis 13.
